**Europäisches Patentamt**

**European Patent Office**

**Office européen des brevets**

(19)

(11) Numéro de publication: **0 015 180**
**A1**

## (12) DEMANDE DE BREVET EUROPEEN

(21) Numéro de dépôt: **80400153.5**

(22) Date de dépôt: **31.01.80**

(51) Int. Cl.³: **F 04 B 43/02**
**H 02 K 33/12**

(30) Priorité: **05.02.79 ZA 790478**

(43) Date de publication de la demande:
**03.09.80 Bulletin 80/18**

(84) Etats Contractants Désignés:
**AT BE CH DE FR GB IT LU NL SE**

(71) Demandeur: **Evrard, Robert**
**5 rue Carnot**
**F-95690 Nesles la Vallee(FR)**

(72) Inventeur: **Evrard, Robert**
**5 rue Carnot**
**F-95690 Nesles la Vallee(FR)**

(74) Mandataire: **Dupuy, Louis et al,**
**CREUSOT-LOIRE 15 rue Pasquier**
**F-75383 Paris Cedex 8(FR)**

(54) **Pompe et procédé de pompage d'un fluide.**

(57) La pompe comporte un corps rigide (7) sur lequel est tendue une membrane (5). La pompe comporte des dispositifs (10,12) pour déformer localement la membrane (5) à la façon d'une vague, en créant une chambre (16) où le fluide est aspiré, puis en faisant mouvoir la chambre vers l'orifice de de refoulement (3) où l'on laisse la membrane reprendre sa forme en faisant disparaître la chambre (16) et en refoulant le fluide.

Fig 1

EP 0 015 180 A1

POMPE ET PROCEDE DE POMPAGE D'UN FLUIDE

La présente invention concerne une pompe pour un fluide, plus particulièrement destinée à titre d'exemple à constituer au moins un étage d'une pompe à vide pour l'obtention d'un vide exempt de contamination d'huile. Elle concerne aussi le procédé de pompage mettant en oeuvre un tel dispositif.

Pour beaucoup d'applications de la technique du vide, l'obtention d'un vide "propre", sans contamination d'huile, est un besoin essentiel. C'est ainsi que les pompes à diffusion d'huile sont de plus en plus souvent remplacées par des pompes ioniques, cryogéniques etc... Malheureusement, ces pompes modernes ne peuvent être mise en oeuvre qui si l'on a déjà obtenu une pression "primaire" de l'ordre de $10^{-2}$ Torr au maximum. Ce vide primaire doit bien entendu être propre lui aussi. Dans l'état actuel de la technologie, des vides primaires propres de $10^{-2}$ Torr ne peuvent être obtenus que par des pompes à sorption, refroidies à l'azote liquide avec tous les inconvénients que cela comporte.

Les seules pompes mécaniques "propres" en usage sont les pompes dites à membrane. Leur vide limite dans les systèmes à un étage est de l'ordre de quelques dixièmes de Torr au moins. Cette limite relativement élevée est due, entre autres choses, à l'usage de soupapes génératrices de ce qu'on appelle un volume mort ; à la fin de chaque cycle, un petit volume du gaz pompé est emprisonné à la pression de refoulement et retourne dans l'enceinte vidée.

La présente invention a pour objet un moyen d'obtenir avec une pompe mécanique un vide primaire "propre" correspondant à une pression suffisamment basse pour l'amorçage des pompes ioniques, cryogéniques etc...

L'invention s'applique donc à une pompe pour transférer un fluide d'un orifice d'admission à un orifice de refoulement.

Selon l'invention la pompe est constituée par une membrane souple imperméable tendue sur un corps rigide auquel elle est fixée de façon étanche par sa périphérie, les orifices d'aspiration et de refoulement débouchant sous la membrane en des emplacements nettement séparés sur le corps ; la pompe comporte au moins trois dispositifs pour manoeuvrer localement la membrane, en la soulevant pour créer une chambre entre le corps et la membrane, ou en l'appliquant contre le corps pour faire disparaître la chambre, ces dispositifs étant placés de telle sorte que l'un crée une chambre au débouché de l'orifice d'aspiration, qu'un autre crée une chambre au débouché de l'orifice de refoulement, les autres étant régulièrement disposés entre les deux extrêmes et à une distance suffisante pour que par le soulèvement simultané de deux dispositifs adjacents les deux chambres adjacentes formées communiquent entre elles ; enfin la pompe comporte en outre des moyens pour commander cycliquement les dispositifs de manoeuvre de la membrane, avec un décalage de l'un à l'autre de façon à faire mouvoir la membrane comme une vague, en déplaçant ainsi la chambre formée du voisinage de l'orifice d'admission au voisinage de l'orifice de refoulement.

Selon une forme de réalisation de l'invention, la pompe comporte deux systèmes identiques disposés symétriquement de part et d'autre d'un corps rigide unique, et les dispositifs de manoeuvre de membrane sont liés un à un de part et d'autre du corps de façon à fonctionner en opposition, l'un soulevant la membrane d'un côté tandis que l'autre laisse l'autre membrane s'appliquer sur l'autre côté du corps.

Selon une forme préférentielle de réalisation de l'invention, les dispositifs de manoeuvre des membranes sont des dispositifs électromécaniques alimentés à partir d'un courant alternatif polyphasé à autant de phases que de groupes de deux dispositifs liés un à un de part et d'autre du corps, chaque groupe étant branché sur une phase différente par l'intermédiaire de diodes, le sens de passage du courant dans les diodes étant différent pour respectivement les dispositifs de part et d'autre du corps.

Enfin, également selon l'invention, le procédé de pompage consiste, par déformation d'une membrane souple étanche, à créer au voisinage de l'orifice d'aspiration une chambre où le fluide sera aspiré, puis par déformation progressive de la membrane à la façon d'une vague à faire cheminer la chambre contenant le fluide vers l'orifice de refoulement, puis en laissant la membrane reprendre sa forme normale à faire disparaître la chambre en refoulant le fluide vers l'orifice de refoulement.

L'invention sera mieux comprise en se référant à un mode particulier de réalisation donné à titre d'exemple et illustré par les dessins annexés.

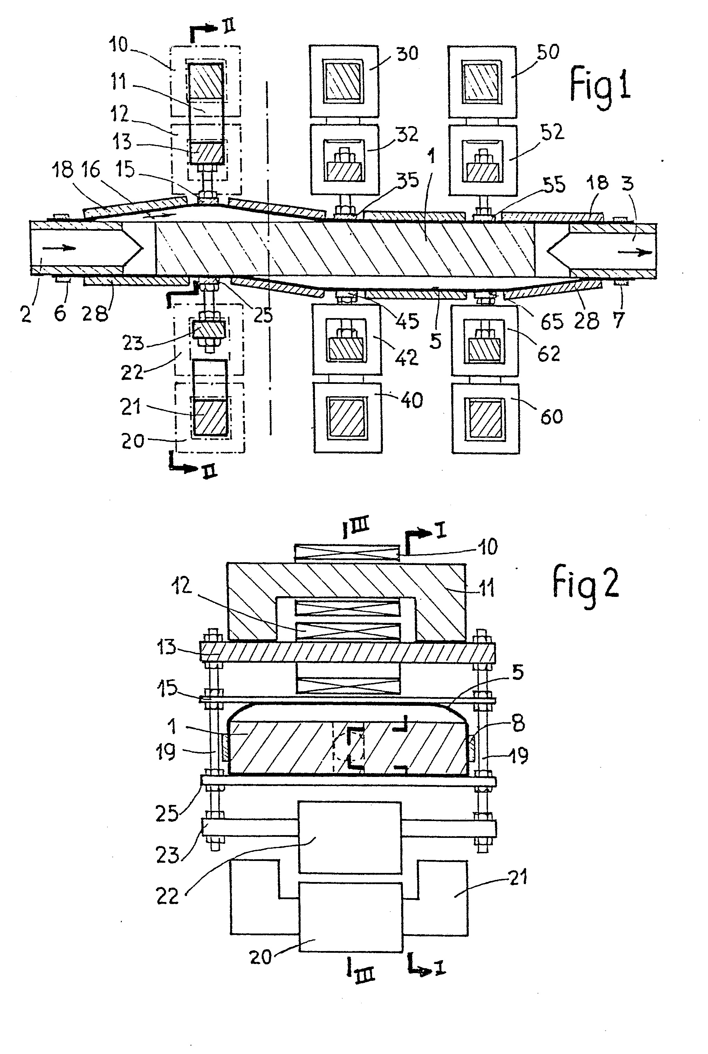

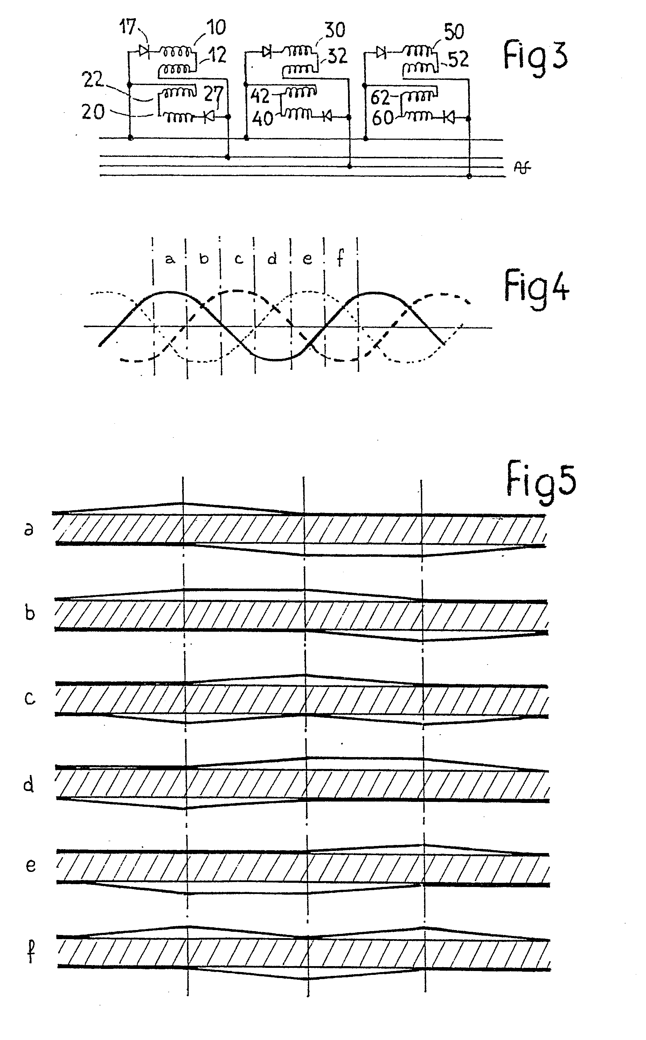

La figure 1 est une coupe longitudinale selon I-I de la figure 2 pour la partie gauche, et selon III-III de la figure 2 pour la partie droite. La figure 2 est une coupe transversale selon II-II de la figure 1. La figure 3 est un schéma de branchement électrique des différents bobinages. La FIGURE 4 est un rappel des variations relatives d'intensité des trois phases d'un courant triphasé. La figure 5 montre schématiquement les déformations successives de la membrane au cours d'un cycle de pompage.

En se référant d'abord aux figures 1 et 2, on voit que la pompe est constituée par une platine rigide 1, percée à chaque extrémité d'un orifice d'aspiration 2 et d'un orifice de refoulement 3. Chaque orifice débouche aussi sur chacune des faces de la platine. La platine 1 est entourée d'un manchon formé d'une membrane souple élastique 5, imperméable aux gaz, réalisée par exemple en néoprène. La membrane 5 est fixée de façon étanche sur les deux extrémités de la platine, par exemple par collage ou par des colliers 6 et 7, respectivement en amont du débouché de l'orifice d'aspiration 2 et en aval du débouché de. l'orifice de refoulement 3. La membrane 5 est également fixée de façon étanche sur les flancs de la platine par les pièces 8, de telle sorte qu'il ne puisse y avoir aucune possibilité de communication entre les zones comprises entre la membrane et respectivement les faces supérieure et inférieure de la platine.

L'appareil comporte trois ensembles identiques de manoeuvre de la membrane, régulièrement répartis entre les débouchés des orifices d'aspiration et de refoulement. Le premier ensemble comporte deux bobinages fixes 10 et 12 d'un côté de la platine, et symétriquement deux autres bobinages analogues 20 et 22 de l'autre côté. Les bobinages 10 et 20 entourent chacun une armature fixe en fer à cheval 11 et 21. Les quatre bobinages fixes et les deux armatures fixes sont rigidement solidarisés avec la platine 1 par des pièces de liaison usuelles faciles à déterminer, et qui n'ont pas été représentées sur les dessins pour ne pas surcharger ceux-ci.

Les bobinages 12 et 22 entourent chacun une armature mobile 13 et 23 de plus petite section que celle de l'intérieur du bobinage. Les armatures 13 et 23 sont reliées par deux tirants entrtoises 19 de façon à former un cadre rigide. Des moyens de guidage, non représentés ici car ils peuvent être tout à fait usuels, ne permettent que des mouvements de translation du cadre perpendiculairement aux faces de la platine. Les tirants 19 maintiennent également deux barres transversales 15 et 25 collées chacune par leur partie centrale, sur la partie supérieure et sur la partie inférieure de la membrane 5.

Les bobinages 10 et 12 sont montés en série, mais avec des sens d'enroulement différents, de façon à engendrer des aimantations opposées dans les armatures 11 et 13. Il en est de même pour les bobinages 20 et 22 et les armatures 21 et 23. En outre, les bobinages 10 et 12 d'une part, et 20 et 22 d'autre part, sont montés en parallèle sur un même circuit alternatif, mais à travers des diodes opposées 17 et 27, comme représenté sur la partie gauche de la figure 3. Ainsi à chaque alternance du courant alternatif un seul des groupes 10 - 12 ou 20 - 22 est alimenté. Si, comme sur les figures 1 et 2, les bobinages 10 et 12 sont alimentés l'armature 13 est attirée vers l'armature fixe 11 et vient s'y coller, déplaçant l'ensemble du cadre vers le haut, sans résistance puisqu'alors l'armature 23 démagnétisée n'est pas attirée par l'armature 21. A l'alternance suivante l'ensemble du cadre sera au contraire entraîné vers le bas, et on obtiendra ainsi un mouvement alternatif du cadre, à la fréquence du courant alternatif d'alimentation.

POur éviter tout retard de mouvement lors des changements de sens du courant, on utilisera de préférence des armatures en alliage à haute perméabilité magnétique et pratiquement sans hystétésis, comme par exemple un ferro - nickel vendu sous la marque commerciale "SUPRANHYSTER 50". Chaque mouvement du cadre, transmis aux barres 15 et 25, entraîne un soulèvement local de la membrane 5, ce qui crée une chambre 16 entre la membrane 5 et la platine 1.

Les deux autres ensembles de manoeuvre de la membrande sont constitués de façon identique au premier qui vient d'être décrit en détail. Ainsi les bobinages 30 - 32 -40 - 42 pour le deuxième ensemble, et 50 - 52 - 60 - 62 pourle troisième, sont respectivement homologues aux bobinages 10 - 12 - 20 - 22 du premier. Ils sont de la même façon alimentés en courant alterna-fif par l'intermédiaire de diodes, mais chacun des trois ensembles est branché sur une phase différente d'un courant alternatif triphasé, comme on le voit sur le schéma de la figure 3.

Ainsi sur chaque face de la platine, la membrane 5 est, en trois points localement et de façon alternative, soulevée puis plaquée contre la platine à la fréquence du courant d'alimentation ; pour chaque point d'action sur la membrane, le mouvement alternatif est décalé d'un tiers de période du courant.

Si l'on revient à la figure 1, le soulèvement de la barre 15 par l'excitation des bobinages 10 et 12 avait entraîné la formation d'une chambre 16, et l'aspiration d'un certain volume de gaz par l'orifice 2. La partie supérieure de la membrane 5 est par ailleurs plaquée contre la platine par les barres 35 et 55, car pour les deux autres ensembles de manoeuvre ce sont sont les bobinages inférieurs 40 - 42 et 60 - 62 qui sont alimentés. Cette situation est maintenue pendant la durée a d'un sixième de période (voir le diagramme de la figure 4). Sur ce diagramme la courbe tracée en trait plein représente le courant qui alimente le premier ensemble 10 - 12 - 20 - 22 ; le deuxième ensemble 30 - 32 - 40 - 42 est alimenté par le courant représenté en traits interrompus ; le troisième est alimenté par le courant représenté en pointillés.

On verra sur la figure 5 les positions successives en forme de vague que prennent les parties supérieure et inférieure de la membrane au cours des six intervalles successifs a à f constituant une période; l'état a correspond à la position représentée plus en détail par la figure 1. On y voit en particulier que le volume aspiré dans la chambre 16 lors du passage de l'état a à l'état f , est progressivement transféré à l'autre extrémité de la platine où, lors de l'abaissement de la barre 55 au passage de l'état f à l'état a de la période suivante, il est refoulé vers l'orifice 3. A chaque période il y a donc pompage d'un volume déterminé de 2 vers 3, et il en est de même sur l'autre face de la platine.

L'utilisation de deux systèmes symétriques, de part et d'autre de la même platine, permet de limiter les efforts mécaniques à mettre en jeu, en équilibrant les efforts dus à la pression atmosphérique, ceux-ci étant importants en raison des vides poussées qui existent sous la membrane. Egalement pour limiter l'écrasement de la membrane en dehors des points d'attache des barres trasversales 15 - 25 ... et augmenter le volume de la chambre mobile, des plaquettes métalliques rigides 18 et 28 sont collées sur la membrane et la raidissent entre les barres transversales.

On pourra noter qu'avec la pompe sans soupapes ainsi réalisée, le volume mort est théoriquement nul ; la pression finale n'est limitée que par les défauts de surface de la platine 1 et de la membrane 5. Si la pompe constitue le deuxième étage d'un système, on peut négliger en première approximation les forces dissymétriques dues aux pressions internes; les forces dues à la pression atmosphérique étant équilibrées, les forces à appliquer n'ont alors qu'à vaincre la tension de la membrane. La pompe décrite constitue un appareil très simple, parfaitement "propre" en ce qui concerne la contamination par l'huile, et présente un encombrement réduit pour une vitesse de pompage élevée. Le modèle représenté permet d'obtenir une vitesse de pompage de plus d'un litre par seconde.

Bien entendu, l'invention n'est pas strictement limitée au mode de réalisation qui a été décrit à titre d'exemple, mais elle couvre aussi les réalisations qui n'en diffèreraient que par des détails, par des variantes d'exécution ou par l'utilisation de moyens équivalents.

Ainsi, bien que la solution électromagnétique avec courant alternatif triphasé apparaisse comme la plus pratique, on pourrait aussi concevoir de commander les dispositifs de manoeuvre de la membrane par des moyens purement mécaniquescomme des cames ou des bielles, ou des moyens pneumatiques ou hydrauliques. On pourrait encore, avec des moyens électromagnétiques, utiliser plus de trois dispositifs de manoeuvre alimentés par un courant polyphasé à autant de phases que de dispositifs.

On pourrait aussi utiliser un modèle simple, avec une membrane sur une seule face de la platine, mais il sera alors nécessaire que les dispositifs de manoeuvre de la membrane puissent vaincre les efforts supplémentaires dus à la pression atmosphériques et non équilibrés.

On pourrait enfin concevoir de remplacer la platine par un corps rigide d'une autre forme pourvu qu'elle soit convexe, pour permettre l'application continue de la membrane tendue sur le corps.-

<u>REVENDICATIONS</u>

1. Pompe pour transférer un fluide d'un orifice d'aspiration à un orifice de refoulement, caractérisée par le fait qu'elle est constituée par une membrane souple imperméable tendue sur un corps rigide auquel elle est fixée de façon étanche par sa périphérie, les orifices d'aspiration et de refoulement débouchant sous la membrane en des emplacements nettement séparés sur le corps ; par le fait que la pompe comporte au moins trois dispositifs pour manoeuvrer localement la membrane en la soulevant pour créer une chambre entre le corps et la membrane , ou l'appliquer contre le corps pour faire disparaitre la chambre, ces dispositifs étant placés de telle sorte que l'un crée une chambre au débouché de l'orifice d'aspiration, qu'un autre crée une chambre au débouché de refoulement, les autres étant régulièrement disposés entre les deux extrêmes et à une distance suffisante pour que par le soulèvement simultané de deux dispositifs adjacents les deux chambres adjacentes formées communiquent entre elles ; et par le fait que la pompe comporte en outre des moyens pour commander cycliquement les dispositifs de manoeuvre de la membrane, avec un décalage de l'un à l'autre de façon à faire mouvoir la membrane comme une vague en déplaçant ainsi la chambre formée, du voisinage de l'orifice d'admission au voisinage de l'orifice de refoulement.

2. Pompe selon revendication 1, caractériséepar le fait qu'elle comporte deux systèmes identiques disposés symétriquement de part et d'autre d'un corps rigide unique, et par le fait que les dispositifs de manoeuvre de membrane sont liés un à un de part et d'autre du corps de façon à fonctionner en opposition, l'un soulevant la membrane tandis que l'autre laisse l'autre membrane s'appliquer sur l'autre côté du corps.

3. Pompe selon revendication 1, caractérisé par le fait que les dispositifs de manoeuvre de la membrane sont des dispositifs électromécaniques alimentés à partir d'un courant alternatif polyphasé à autant de phases que de dispositifs de manoeuvre, chaque dispositif étant branché sur une phase différente par l'intermédiaire de diodes de même sens de passage du courant.

4. Pompe selon revendication 2, caractérisée par le fait que les dispositifs de manoeuvre des membranes sont des dispositifs électromécaniques alimentés à partir d'un courant alternatif polyphasé à autant de phases que de groupes de deux dispositifs liés un à un de part et d'autre du corps, chaque groupe étant branché sur une phase différente par l'intermédiaire de diodes, le sens de passage du courant dans les diodes étant différent pour, respectivement, les dispositifs de part et d'autre du corps.

5. Procédé de pompage d'un fluide entre un orifice d'aspiration et un orifice de refoulement, caractérisé par le fait qu'il consiste, par déformation d'une membrane souple étanche, à créer au voisinage de l'orifice d'aspiration une chambre où le fluide sera aspiré, puis par déformation progressive de la membrane à la façon d'une vague à faire cheminer la chambre contenant le fluide vers l'orifice de refoulement, puis en laissant la membrane reprendre sa forme normale à faire disparaître la chambre en refoulant le fluide vers l'orifice de refoulement.

Fig 1

Fig 2

0015180

2/2

Fig 3

Fig 4

Fig 5

**Office européen des brevets**

## RAPPORT DE RECHERCHE EUROPEENNE

Numéro de la demande

EP 80 40 0153

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendication concernée | |
| X | <u>BE - A - 713 809</u> (VEB HALLE)<br><br>* Page 3, paragraphes 3-6; figures 1 et 2 *<br><br>-- | 1-5 | F 04 B 43/02<br>H 02 K 33/12 |
| X | <u>DE - B - 1 194 185</u> (HELLWEG)<br><br>* Colonne 1, lignes 33-52, colonne 2, lignes 15-25; figure 2 *<br><br>-- | 1,3,5 | |
| X | <u>US - A - 2 285 974</u> (HUBER)<br><br>* Page 1, colonne de gauche, lignes 41-55, colonne de droite lignes 1-30; page 2, colonne de droite, lignes 54-75, figures 1 et 5 *<br><br>-- | 1,2,5 | **DOMAINES TECHNIQUES RECHERCHES (Int. Cl. 3)**<br><br>F 04 B<br>H 02 K |
| X | <u>DE - C - 637 586</u> (REHSE)<br><br>* Page 1, lignes 50-62; page 2, lignes 1-46; figures 1-3 *<br><br>-- | 1,2,5 | |
| X | <u>US - A - 2 926 614</u> (ROSE)<br><br>* Colonne 2, lignes 8-45; figure 1 *<br><br>---- | 1,5 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 14-05-1980 | HEINLEIN |

OEB Form 1503.1   06.78